# EUROPEAN PATENT SPECIFICATION

(11) **EP 3 711 476 B1**
(45) Date of publication and mention of the grant of the patent: **31.01.2024**
(21) Application number: 18877552.2
(22) Date of filing: 03.08.2018
(51) Int. Cl.: A01G 23/097, A01G 23/095, F16D 1/10, F16C 17/02, F16C 33/20

(54) **WOOD FEEDER FOR FORESTRY HARVESTER**
HOLZZUFÜHRVORRICHTUNG FÜR FORSTWIRTSCHAFTLICHE ERNTEMASCHINEN
DISPOSITIF D'ALIMENTATION EN BOIS POUR ÉBRANCHEUSE DE SYLVICULTURE

(30) Priority: 14.11.2017 JP 2017219212
(43) Date of publication of application: 23.09.2020
(73) Proprietor: Matsumoto, Ryozo, Kasuya-gun, Fukuoka 811-2412 (JP)
(72) Inventor: Matsumoto, Ryozo, Kasuya-gun, Fukuoka 811-2412 (JP)
(74) Representative: Schön, Christoph
(86) International application number: PCT/JP2018/029234
(87) International publication number: WO 2019/097773

(56) References cited:
- WO-A2-2010/143076
- WO-A2-2010/143076
- JP-B2- 5 914 958
- JP-U- H 077 389
- US-A1- 2010 313 997

## Description

### TECHNICAL FIELD

The present invention relates to a forestry harvester used to cut a felled tree into logs each having a given length while delimbing the tree, and more particularly to a tree feeder of such a forestry harvester.

### BACKGROUND ART

This type of harvester is disclosed in WO2010/143076 A2, JP 5914958 B, US2010/313997 A1 and others. Each of the harvesters disclosed in those prior art documents basically comprises: a stationary upper cutter attached to a harvester body suspended from and supported by a boom; a pair of cutter arms configured to be operated to be opened and closed in a right-left (lateral) direction and each provided with a side cutter; a pair of right and left feed rollers configured to be operated to be opened and closed in the same manner and to be rotationally driven, respectively, by a pair of right and left reversible hydraulic motors; and a power chain saw configured to be swung for cutting operation. In order to enable a smoother feed of a tree in cooperation with the openable-closable right and left feed rollers, the harvester body is further provided with a mid-roller on the longitudinal center of the harvester body. The mid-roller is configured to be rotationally driven by a pair of right and left hydraulic motors.

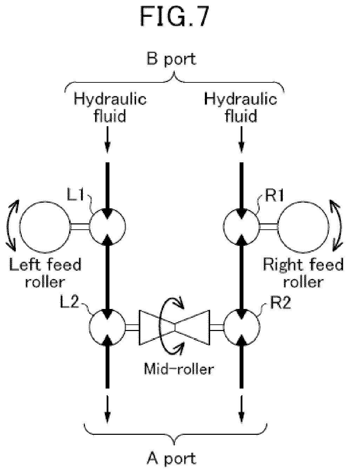

FIG. 7 schematically shows a hydraulic circuit for the hydraulic motors of the feed rollers and the hydraulic motors of the mid-roller. In the hydraulic circuit, each of the right and left hydraulic motors R1, L1 of the right and left feed rollers is hydraulically connected in series with a corresponding one of the right and left hydraulic motors R2, L2 of the mid-roller, wherein the right and left hydraulic motors R1, L1 of the right and left feed rollers are hydraulically connected in parallel, and the right and left hydraulic motors R2, L2 of the mid-roller are hydraulically connected in parallel. Thus, hydraulic fluid exiting from a B port of a switching valve rotationally drives the right and left hydraulic motors R1, L1, and then hydraulic fluid discharged from each of the right and left hydraulic motors R1, L1 rotationally drives a corresponding one of the right and left hydraulic motors R2, L2, whereafter hydraulic fluid discharged from the right and left hydraulic motors R2, L2 is returned to an A port of the switching valve.

A felled tree is held by the cutter arms and the feed rollers, wherein the feed rollers act to press the tree against the mid-roller. The feed rollers are rotated according to rotational driving of the right and left hydraulic motors R1, L1, and the mid-roller is rotated according to rotational driving of the right and left hydraulic motors R2, L2, thereby causing the tree to be moved forwardly by a given length. In this process, when the tree has branches, the branches hit against the stationary upper cutter and the side cutters, so that they are removed from the tree by these cutters. During feed of a felled tree, the peripheral speed of each of the right and left feed rollers is the same as that of the mid-roller. If not, it is impossible to successfully feed the tree.

In design, the motor speeds of the hydraulic motors are set such that the peripheral speeds of the rollers become coincident with each other. However, if leakage occurs in the inside of the hydraulic motor of the right or left feed roller, the amount of hydraulic fluid entering the hydraulic motor R2 or L2 of the mid-roller becomes less than a prescribed amount, so that the peripheral speed of the mid-roller becomes lower than that of each of the right and left feed rollers. This gives rise to a phenomenon that the feed rollers idly (freely) rotate to absorb the difference in peripheral speed. As a result, a feed speed of the tree is likely to become lower than a desired speed, and the feed rollers are likely to scratch the surface of the tree due to the idle rotation, to reduce the commercial value of the resulting timber or logs.

### SUMMARY OF INVENTION

### [Technical Problem]

It is an object of the present invention to a tree feeder of a forestry harvester capable of smoothly and reliably feeding a felled tree under cooperation between a mid-roller and a pair of right and left feed rollers while avoiding the aforementioned idle rotation of the feed rollers.

### [Solution to Technical Problem]

In order to achieve the above object, the present invention provides a tree feeder of a forestry harvester, which comprises a hydraulic circuit in which each of a pair of right and left hydraulic motors of a pair of right and left feed rollers is hydraulically connected in series with a corresponding one of a pair of left and right hydraulic motors of a mid-roller, wherein the tree feeder is configured to rotate the mid-roller and the right and left feed rollers by the hydraulic motors thereof so as to feed a felled tree in a manner enabling delimbing, and wherein the mid-roller comprises: an inner wheel fixedly connected to respective rotary shafts of the pair of left and right hydraulic motors thereof; an outer wheel; and a ring-shaped rotation transmission member disposed between the inner wheel and the outer wheel, wherein the ring-shaped rotation transmission member is fixedly attached to an inner surface of the outer wheel or an outer surface of the inner wheel, and configured to transmit a rotation of the inner wheel to the outer wheel, and, when a difference in rotational speed arises between the mid-roller and each of the left and right feed rollers, allow the outer wheel to roll on the inner wheel in a slipping manner.

### [Function/Effect]

In the tree feeder of the present invention, in a normal state, the hydraulic motors of the mid-roller and the hydraulic motors of the right and left rollers are rotated at the same motor speed, so that a felled tree is successfully fed according to rotations of the mid-roller and the right and left rollers. During this process, in the mid-roller, the outer wheel is rotated integrally with the inner wheel through the ring-shaped rotation transmission member. When the motor speed of one of the hydraulic motors of the mid-roller becomes lower than that of a corresponding one of the hydraulic motors of the right and left feed rollers, the outer wheel of the mid-roller is allowed to, according to movement of the tree fed by the feeding rollers, roll on the inner wheel rotated by the right and left hydraulic motors, by means of slipping of the ring-shaped rotation transmission member. Thus, it becomes possible to successfully or reliably feed the tree according to the rotation of the right and left feed rollers, without idle rotation with respect the tree.

### BRIEF DESCRIPTION OF DRAWINGS

FIG. 1 is a perspective view of a forestry harvester involving the present invention, when viewed obliquely downwardly from thereabove.
FIG. 2 is a perspective view of the harvester illustrated in FIG. 1, when viewed obliquely upwardly from therebelow.
FIG. 3 is a front view of a tree feeder of the harvester illustrated in FIGS. 1 and 2.
FIG. 4 is a bottom view of the tree feeder illustrated in FIG. 3.
FIG. 5 is a diagram of a hydraulic circuit according to the present invention.
FIG. 6 is a sectional view showing the details of a mid-roller.
FIG. 7 is an explanatory diagram of a conventional hydraulic circuit.

### DESCRIPTION OF EMBODIMENTS

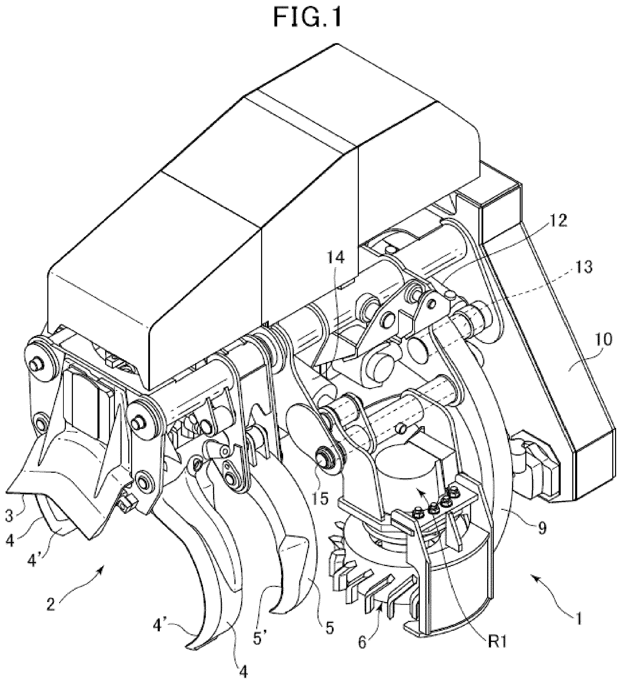

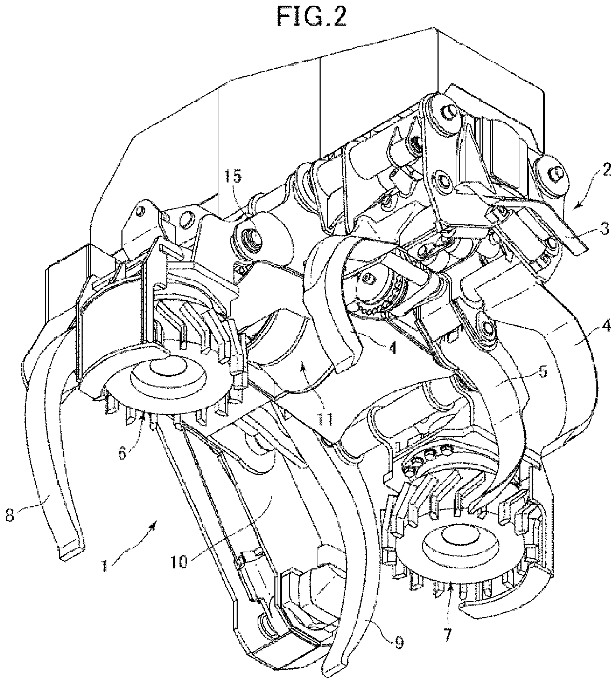

As shown in FIGS. 1 and 2, a harvester involving the present invention comprises a tree feed unit 1 and a delimbing unit 2. The tree feed unit 1 comprises: a pair of right and left feed rollers 6, 7 configured to be operated to be opened and closed and to be rotationally driven, respectively, by a pair of right and left reversible hydraulic motors R1, L1; a pair of right and left clamp arms 8, 9 configured to be operated to be opened and closed in a right-left (lateral) direction; and a casing 10 receiving therein a power chain saw configured to be swung for cutting operation. The delimbing unit 2 comprises: a stationary upper cutter 3 attached to a unit body of the delimbing unit 2; three cutter arms 4, 4, 5 configured to be operated to be opened and closed in the lateral direction and provided with side cutters 4', 4' and a lower cutter 5', respectively. In order to enable a smoother feed of a felled tree in cooperation with the openable-closable right and left feed rollers 6, 7, a unit body of the tree feed unit 1 is provided with a mid-roller 11 on the longitudinal center of the tree feed unit. The mid-roller 11 is configured to be rotationally driven by a pair of right and left hydraulic motors R2, L2.

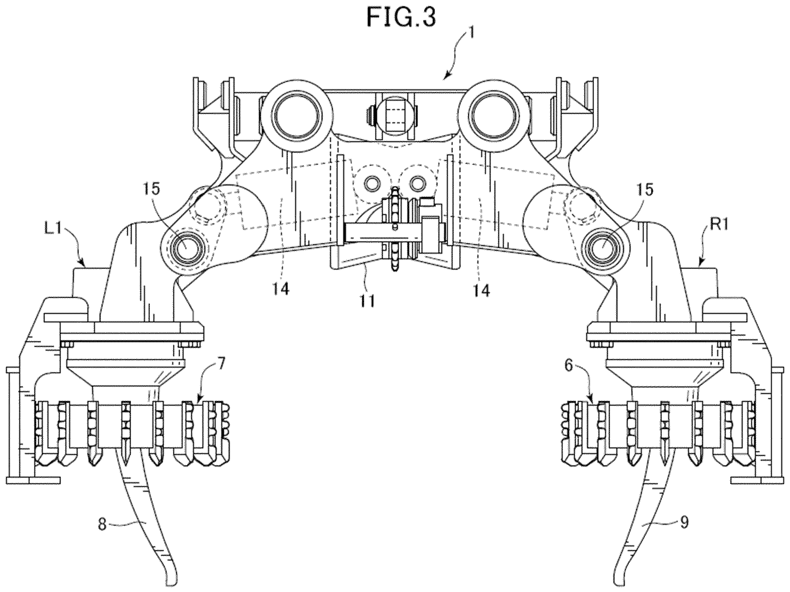

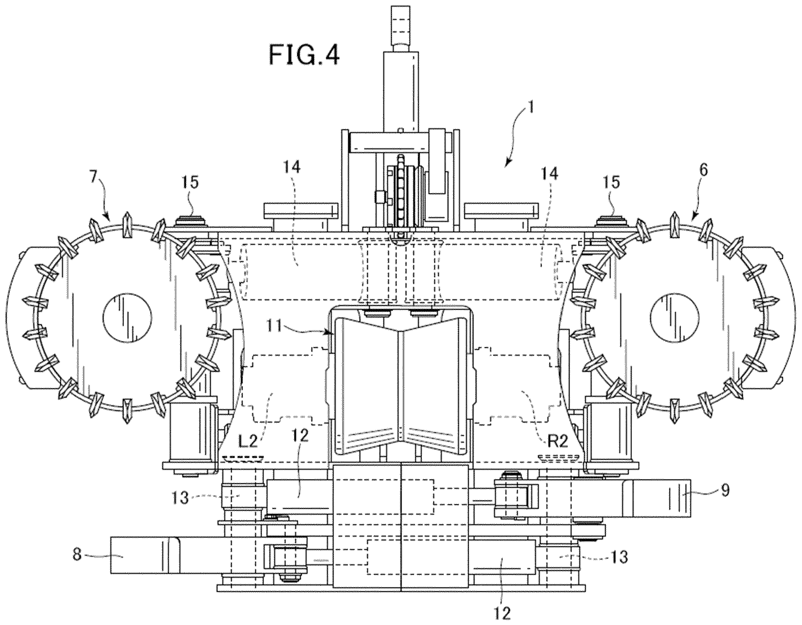

As can be understood from FIGS. 2, 3 and 4, holding of the tree is performed by the clamp arms 8, 9 in a state in which they are closed about respective pivot pins 13, 13 according to stretching of respective hydraulic cylinders 12, 12, and the feed rollers 6, 7 in a state in which they are closed about respective pivot pins 15, 15 according to stretching of respective hydraulic cylinders 14, 14.

The pair of feed rollers 6, 7 and the mid-roller 11 are rotated, respectively, by the pair of hydraulic motors R1, L1 and the pair of hydraulic motors R2, L2, thereby causing the tree to be fed forwardly by a given length. In this process, branches of the tree hit against the stationary chevron-shaped upper cutter 3, the side cutters 4', 4' of the front and intermediate cutter arms 4, 4 and the lower cutter 5' of the rear cutter arm 5, so that they are removed from the tree by these cutters.

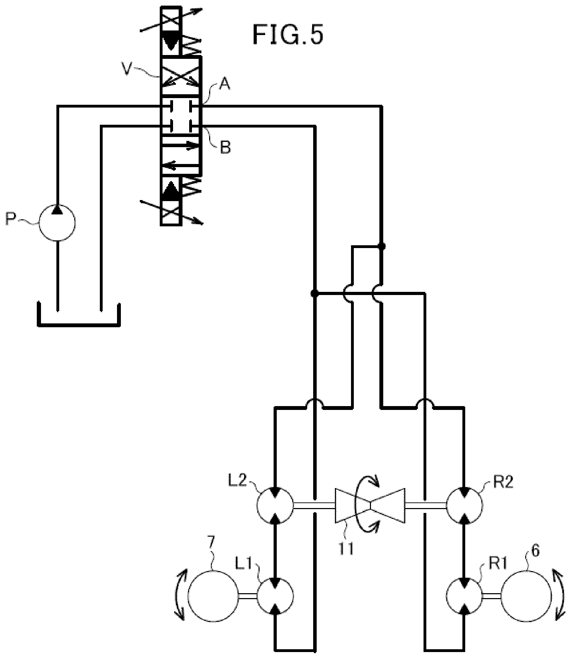

FIG. 5 is a diagram of a hydraulic circuit of the tree feed unit according to the present invention. In the hydraulic circuit, each of the right and left hydraulic motors R1, L1 of the right and left feed rollers 6, 7 is hydraulically connected in series with a corresponding one of the right and left hydraulic motors R2, L2 of the mid-roller 11, wherein the right and left hydraulic motors R1, L1 of the right and left feed rollers 6, 7 are hydraulically connected in parallel, and the right and left hydraulic motors R2, L2 of the mid-roller 11 are hydraulically connected in parallel. Thus, hydraulic fluid pumped from a hydraulic pump P and exiting from a B port of a switching valve V according to its switching operation rotationally drives the right and left hydraulic motors R1, L1, and then hydraulic fluid discharged from each of the right and left hydraulic motors R1, L1 rotationally drives a corresponding one of the right and left hydraulic motors R2, L2, whereafter hydraulic fluid discharged from the right and left hydraulic motors R2, L2 is returned to an A port of the switching valve.

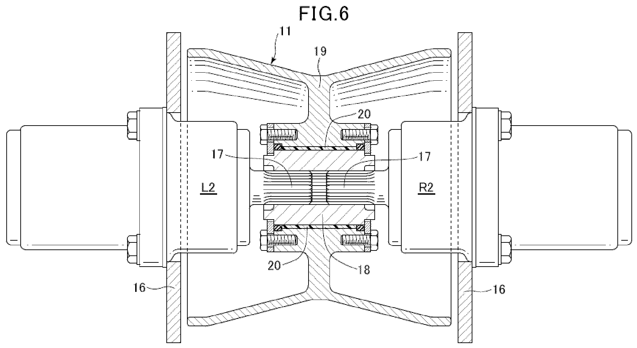

FIG. 6 is a sectional view showing the details of the mid-roller 11. The right and left hydraulic motors R2, L2 are fixed, respectively, to a pair of mounting plates 16, 16 fixedly attached to the unit body of the tree feed unit, and the mid-roller 11 comprises: an inner wheel 18 fixedly connected to respective rotary shafts 17, 17 of the left and right hydraulic motors R2. L2, by means of, e.g., a spline coupling illustrated in FIG. 6; an outer wheel 19; and a ring-shaped rotation transmission member 20 disposed between the inner wheel and the outer wheel. The ring-shaped rotation transmission member 20 is fixedly attached to an inner surface of the outer wheel 19 or an outer surface of the inner wheel 18, to allow the outer wheel 19 to roll on the inner wheel 18 together with the ring-shaped rotation transmission member 20 fixedly attached on the inner surface thereof, or on the ring-shaped rotation transmission member 20 fixedly attached on the outer surface of the inner wheel 10. The ring-shaped rotation transmission member 20 is preferably made of a composite bearing material (e.g., tetrafluoroethylene resin mixed with a filler) having a low friction property (preferably, friction coefficient: 0 to 0.3), strength equivalent to that of a metal material, and dimensional stability.

In the tree feed unit according to the present invention, in a normal state, the hydraulic motors R2, L2 of the mid-roller 11 and the hydraulic motors R1, L1 of the right and left rollers are rotated at the same motor speed, so that a felled tree is successfully fed according to rotations of the mid-roller and the right and left rollers. During this process, in the mid-roller 11, the outer wheel 19 is rotated integrally with the inner wheel 18 through the ring-shaped rotation transmission member. The rotary shafts of the hydraulic motors R2, L2 of the mid-roller 11 are directly connected to the inner wheel. Thus, when the motor speed of one of the hydraulic motors R2, L2 of the mid-roller 11 becomes lower than that of a corresponding one of the hydraulic motors R1, L1 of the right and left feed rollers, the motor speed of the other hydraulic motor of the mid-roller is also lowered, and the other one of the hydraulic motors of the right and left feed rollers is hydraulically tuned with respect to the one of the hydraulic motors of the right and left feed rollers. According to movement of the tree fed by the feeding rollers, the outer wheel 19 is allowed to roll on the inner wheel which is rotated by the right and left hydraulic motors, together with the ring-shaped rotation transmission member, or on the ring-shaped rotation transmission member integral with the inner wheel, in a slipping manner. Thus, it becomes possible to successfully or reliably feed the tree according to the rotation of the right and left feed rollers, without idle rotation with respect the tree.

### LIST OF REFERENCE SIGNS

R1: hydraulic motor
L1: hydraulic motor
R2: hydraulic motor
L2: hydraulic motor
6: feed roller
7: feed roller
11: mid-roller
17: rotary shaft
18: inner wheel
19: outer wheel
20: ring-shaped rotation transmission member

## Claims

1. A tree feeder of a forestry harvester, comprising a hydraulic circuit in which each of a pair of right and left hydraulic motors (R1, L1) of a pair of right and left feed rollers (6, 7) is hydraulically connected in series with a corresponding one of a pair of left and right hydraulic motors (R2, L2) of a mid-roller (11), wherein the mid-roller (11) comprises: an inner wheel (18) fixedly connected to respective rotary shafts (17) of the pair of left and right hydraulic motors (R1, L1) thereof; an outer wheel (19); and a ring-shaped rotation transmission member (20) disposed between the inner wheel (18) and the outer wheel (19),
wherein the ring-shaped rotation transmission member (20) is fixedly attached to an inner surface of the outer wheel (19) or an outer surface of the inner wheel (18),
**characterized in that** the ring-shaped rotation transmission member (20) is configured to transmit a rotation of the inner wheel (18) to the outer wheel (19) so that the outer wheel (19) is rotated integrally with the inner wheel (18), in a state where the hydraulic motors (R2, L2) of the mid-roller (11) and the hydraulic motors (R1, L1) of the right and left feed rollers (6, 7) are rotated at the same motor speed,
and **in that** the ring-shaped rotation transmission member (20) is further configured to, allow the outer wheel (19) to roll on the inner wheel (18) in a slipping manner, according to movement of the tree fed by the right and left feed rollers (6, 7), in a state where the motor speed of one of the hydraulic motors (R2, L2) of the mid-roller (11) is lower than that of a corresponding one of the hydraulic motors (R1, L1) of the right and left feed rollers (6, 7).

## Patentansprüche

1. Baumzuführvorrichtung einer forstwirtschaftlichen Erntemaschine, umfassend eine Hydraulikschaltung, in der jeder eines Paars aus einem rechten und einem linken Hydraulikmotor (R1, L1) eines Paares aus einer rechten und einer linken Zuführwalze (6, 7) hydraulisch in Reihe mit einem entsprechenden eines Paars aus einem linken und einem rechten Hydraulikmotor (R2, L2) einer mittleren Walze (11) verbunden ist, wobei die mittlere Walze (11) Folgendes umfasst: ein inneres Rad (18), das starr mit den entsprechenden Drehwellen (17) des Paars aus einem linken und einem rechten Hydraulikmotor (R1, L1) verbunden ist, ein äußeres Rad (19), und ein ringförmiges Rotationsübertragungselement (20), das zwischen dem inneren Rad (18) und dem äußeren Rad (19) angeordnet ist,
wobei das ringförmige Rotationsübertragungselement (20) starr an einer inneren Oberfläche des äußeren Rads (19) oder an einer äußeren Oberfläche des inneren Rads (18) angebracht ist,
**dadurch gekennzeichnet, dass**
das ringförmige Rotationsübertragungselement (20) konfiguriert ist, eine Rotation des inneren Rads (18) auf das äußere Rad (19), so dass das äußere Rad (19) integral mit dem inneren Rad (18) gedreht wird, in einem Zustand zu übertragen, in dem die Hydraulikmotoren (R2, L2) der mittleren Walze (11) und die Hydraulikmotoren (R1, L1) der rechten und der linken Zuführwalze (6, 7) mit der gleichen Motorgeschwindigkeit gedreht werden,
und **dadurch gekennzeichnet, dass** das ringförmige Rotationsübertragungselement (20) ferner konfiguriert ist, zu ermöglichen, dass das äußere Rad (19) in gleitender Weise auf dem inneren Rad (18) entsprechend der Bewegung des Baums, der mittels der rechten und der linken Zuführwalze (6, 7) zugeführt wird, in einem Zustand rollt, in dem die Motorgeschwindigkeit eines der Hydraulikmotoren (R2, L2) der mittleren Walze (11) geringer als die eines entsprechenden der Hydraulikmotoren (R1, L1) der rechten und der linken Zuführwalze (6, 7) ist.

## Revendications

1. Dispositif pour alimenter en arbres une abatteuse forestière, comprenant un circuit hydraulique dans lequel chacun d'une paire de moteurs hydrauliques droit et gauche (R1, L1) d'une paire de rouleaux d'alimentation droit et gauche (6, 7) est relié hydrauliquement en série à l'un correspondant d'une paire de moteurs hydrauliques gauche et droit (R2, L2) d'un rouleau médian (11), dans lequel le rouleau médian (11) comprend : une roue intérieure (18) reliée fixement à des arbres rotatifs respectifs (17) de la paire de moteurs hydrauliques gauche et droit (R1, L1) de celui-ci ; une roue extérieure (19) ; et un membre de transmission de rotation annulaire (20) disposé entre la roue intérieure (18) et la roue extérieure (19),
dans lequel le membre de transmission de rotation annulaire (20) est fixé de manière fixe à une surface intérieure de la roue extérieure (19) ou une surface extérieure de la roue intérieure (18),
**caractérisé en ce que** le membre de transmission de rotation annulaire (20) est configuré pour transmettre une rotation de la roue intérieure (18) à la roue extérieure (19) de façon à ce que la roue extérieure (19) soit tournée intégralement avec la roue intérieure (18), dans un état où les moteurs hydrauliques (R2, L2) du rouleau médian (11) et les moteurs hydrauliques (R1, L1) des rouleaux d'alimentation droit et gauche (6, 7) sont tournés à la même vitesse de moteur,
et **caractérisé en ce que** le membre de transmission de rotation annulaire (20) est en outre configuré pour faire rouler la roue extérieure (19) sur la roue intérieure (18) dans une manière de glissement, selon le mouvement de l'arbre alimenté par les rouleaux d'alimentation droit et gauche (6, 7), dans un état où la vitesse du moteur de l'un des moteurs hydrauliques (R2, L2) du rouleau médian (11) est inférieure à celle d'un correspondant des moteurs hydrauliques (R1, L1) des rouleaux d'alimentation droit et gauche (6, 7).
